# EUROPEAN PATENT SPECIFICATION

(11) **EP 3 714 577 B1**
(45) Date of publication and mention of the grant of the patent: **18.02.2026**
(21) Application number: 18878228.8
(22) Date of filing: 20.11.2018
(51) Int. Cl.: H04L 12/46, H04L 45/02, H04L 45/24, H04L 9/40, H04L 69/14, H04L 67/141

(54) **MITIGATING AGAINST TUNNEL ERRORS BETWEEN PEERS IN VIRTUAL PRIVATE NETWORKS**
VERRINGERUNG GEGEN TUNNELFEHLER ZWISCHEN PEERS IN VIRTUELLEN PRIVATEN NETZWERKEN
ATTÉNUATION D'ERREURS DE TUNNEL ENTRE DES PAIRS DANS DES RÉSEAUX PRIVÉS VIRTUELS

(30) Priority: 20.11.2017 NZ 17737496
(43) Date of publication of application: 30.09.2020
(73) Proprietor: Mako Networks, Inc., Elgin, IL 60123 (US)
(72) Inventor: COPLEY, Michael Alan, Rosedale Auckland 0632 (NZ)
(74) Representative: HGF
(86) International application number: PCT/NZ2018/050164
(87) International publication number: WO 2019/098860

(56) References cited:
- WO-A1-2016/020727
- WO-A1-2017/139699
- US-A1- 2010 195 649
- US-A1- 2013 283 037
- US-A1- 2015 139 193
- US-A1- 2016 043 969
- US-A1- 2016 226 725
- US-A1- 2017 155 590

## Description

### FIELD OF INVENTION

The invention generally relates to methods and systems for transmitting data between peers in Virtual Private Networks (VPNs). More particularly the invention relates to VPNs with provision for channel independent tunnel identification and redirection.

### BACKGROUND OF THE INVENTION

A Virtual Private Network (VPN) is effectively a tunnel through a network between two cooperating routing processes. The tunnel is established by encapsulating network packets in a layer after encrypting them. The layer in which the packets are encrypted may be of various types dependent on the VPN protocol chosen.

A well-known encryption protocol is IPSec which provides the ability to encrypt either just the payload of a packet (transport mode) or to encrypt a complete packet (tunnel mode).

In the tunnel mode of IPSec, the entire packet is encrypted and/or authenticated usually within a layer level delivery protocol equal to or higher than the payload protocol. Typically, the external protocol is ESP/IP or UDP/IP, whose packets carry no information about the payload they are carrying within it.

Usually the tunnel is established with a tunnelling protocol such as IKE and ISAKMP in which a client process calls a server process to set up a session for a tunnel in which IPSec packets and their payloads are carried within the tunnelling protocol packets.

While these packets carry a tunnel id or security parameter index (SPI) the packet is reliant on the channel over which the packets are provided being correctly identified in order for the packet to be processed. If the channel on which the packets are being sent changes in any way, the packets will not be recognised.

This means that if a tunnel with IP packets carrying tunnelling protocol and IPSec packets is disrupted there is no way for the client end to provide any information to the server end, since any attempt to return information to the originating IP address cannot be related to any tunnel data and has no authentication information. Normally it is required to re-establish a tunnel anew from the establishing end, something which takes an appreciable time.

Similarly, if the routing of a tunnel changes, for instance by the insertion of a new network behind the remote server, there is no easy method of advising the local end of the change.

None of the several tunnelling protocols (IPSec, SSL, PPTP/L2TP based for the most part) resolve these problems, requiring the complete re-establishment of a new tunnel to recommence the tunnel traffic. Typically this requires a time lapse sufficient that any transaction ongoing will lapse. Therefore there is a need to provide some method of detecting the interruption of a tunnel and providing a method of rapidly re-establishing the same or another tunnel for the required traffic.

It is an object of at least preferred embodiments of the present invention to address at least some of the aforementioned disadvantages.

An additional or alternative object is to provide a tunnelling protocol capable of replacing or encapsulating IPSec packets which resolves this issue and others caused by the transient nature of a tunnel.

An additional or alternative object is to provide a means of confirming that a tunnel is still operational despite the lack of any user data packets being transferred.

An additional or alternative object is to at least provide the public with a useful choice.

US 2015/0139193 discloses a tunnel server to receive a data unit addressed to a communication device, where the tunnel server defines a first instance of the data unit and a second instance of the data unit. The first instance of the data unit is sent to the communication device via a first tunnel defined between at least the tunnel server and a first base station associated with a first network. The second instance of the data unit is sent to the communication device via a second tunnel defined between at least the tunnel server and a second base station associated with a second network.

US 2016/226725 A1 discloses a method for detecting duplicate packets.

### SUMMARY OF THE INVENTION

The present invention is defined in the appended independent claims to which reference should be made. Advantageous features are set out in the appended dependent claims.

The terms 'component', 'module', 'system', 'interface', and/or the like as used in this specification in relation to a processor are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

The term 'connected to' as used in this specification in relation to data or signal transfer includes all direct or indirect types of communication, including wired and wireless, via a cellular network, via a data bus, or any other computer structure. It is envisaged that they may be intervening elements between the connected integers. Variants such as 'in communication with', 'joined to', and 'attached to' are to be interpreted in a similar manner. Related terms such as 'connecting' and 'in connection with' are to be interpreted in the same manner.

The term 'channel' as used in this specification includes one or more of the list comprising network connection type, network IP address, and network port. An example of a network connection type includes 'UDP'. An example of a network IP address includes 203.0.113.1. An example of a network port includes '2453'.

Within this specification the terms 'server' and 'client' are interchangeable in that they are roles rather than design factors in hardware. Similarly 'local' and 'remote' do not distinguish differences in hardware or function but serve to differentiate relative locations.

The invention in one aspect comprises several steps. The relation of one or more of such steps with respect to each of the others, the apparatus embodying features of construction, and combinations of elements and arrangement of parts that are adapted to affect such steps, are all exemplified in the following detailed disclosure.

### BRIEF DESCRIPTION OF THE DRAWINGS

Preferred forms of the method and system for transmitting data will now be described by way of example only with reference to the accompanying figures in which:
Figure 1 shows a block diagram of an embodiment of a VPN;
Figure 2 shows a method for establishing a tunnel between a first peer and a second peer;
Figure 3 shows a method for transmitting a data packet from a peer;
Figure 4 shows a method for assembling the data packet as part of the method of figure 3;
Figure 5 shows a method of resolving data packets received at a peer;
Figure 6 shows an example of a method for processing a data packet when received by a peer as described above with reference to figure 5; and
Figure 7 shows an example of a computing device configured to implement at least part of the network of figure 1.

### DETAILED DESCRIPTION

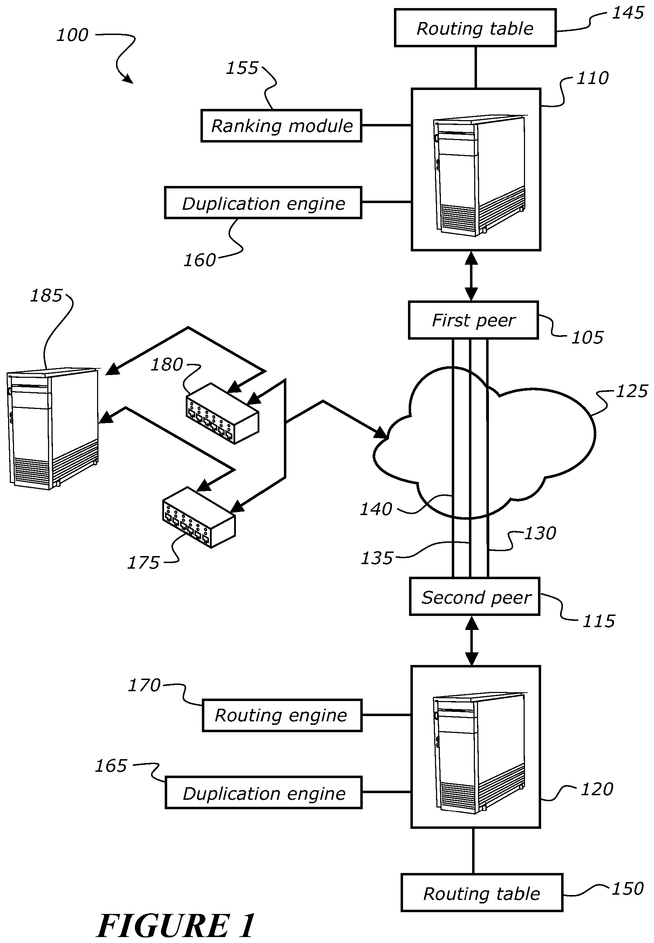

Figure 1 shows a Virtual Private Network (VPN) 100 in accordance with an embodiment of the invention. The network includes a first peer 105 connected to a first peer local network 110. The first peer 105 may also be referred to as an initiator peer.

In an embodiment a second peer 115 is connected to a second peer local network 120. In an embodiment network 120 is remote to network 110. The second peer 115 may also be referred to as a responder peer.

First peer 105 and second peer 115 are connected to each other via the internet 125 or other suitable network or combination of networks, so as to exchange data between peer 105 and peer 115. Examples of suitable networks include fibre networks, Wi-Fi networks, and cellular networks.

In an embodiment the network 100 further includes a plurality of tunnelling sessions or tunnels. Examples of tunnels are indicated at 130, 135 and 140. It will be appreciated that at least one of the tunnels has a path between peer 105 and peer 115 that involves a combination of networks.

In an embodiment the first peer 105 and/or the second peer 115 includes a server connected to a router (not shown). The router facilitates connection to network 125 via a VPN.

In an embodiment the first peer 105 and/or the second peer 115 includes a smartphone, tablet, wearable device or similar device running a VPN directly from the device rather than through a router. Such a device may be configured to include two or more connections over which data packets may be exchanged. Examples of connections include Wi-Fi network and cellular network connections.

In an embodiment a routing table 145 is maintained in computer memory associated to the first peer 105. Routing table 150 is maintained in computer memory associated to the second peer 115.

The operation of the tunnels 130, 135 and 140 and the routing tables 145 and 150 are further described below. References below to tunnels between peers include references to tunnels between routers associated to respective peers.

In an embodiment there are at least two tunnels between first peer 105 and second peer 115. In an embodiment there exist multiple tunnels between first peer 105 and second peer 115. For example, there could be two tunnels, three tunnels, or more than three tunnels.

In an embodiment a first tunnel has a first path or channel between first peer 105 and second peer 115. A second tunnel has a second path or channel between first peer 105 and second peer 115. In an embodiment the first path is different to the second path. For example, the first path in an embodiment comprises a fibre channel while the second path comprises a cellular channel.

In an embodiment the tunnels are associated to respective paths or channels, the paths or channels are different to each other. The use of different paths or channels for different tunnels has the potential to provide increased reliability of the network as the failure of one path or channel simply means that other paths or channels are available within which to exchange data between the first peer 105 and the second peer 115.A first duplication engine 160 and a ranking module 155 are associated to first peer 105. The operation of first duplication engine 160 and ranking module 155 is further described below. In summary the ranking module determines which of the data to be transmitted from first peer 105 is important or critical. The first duplication engine 160 creates duplicate packets of important or critical data to be transmitted within different tunnels.

A second duplication engine 165 is associated to second peer 115. The second duplication engine 165 detects duplicate packets created by the duplication engine 160. Second duplication engine 165 discards sufficient duplicate data packets so as to remove duplicates.

Routing engine 170 is associated to second peer 115. The operation of the routing engine 170 is further described below. In summary the routing engine 170 detects and resolves changes in routes or paths between first peer 105 and second peer 115.

In an embodiment the network 100 includes VPN routers 175 and 180 each capable of acting as VPN concentrators and connected to a local network represented by server 185.

In an embodiment, each of the VPN routers 175 and 180 is a remotely managed router managed from network 185 via the internet 125 and via VPN tunnels (not shown) set up initially from default settings in the routers, but eventually by individual VPN tunnels allocated to each router.

In an embodiment each router 110, 120, 175, 180 is configured to manage a plurality of VPN tunnels. Some of the tunnels may tunnel through other VPN routers for instance to reach a secure location inside a large local network.

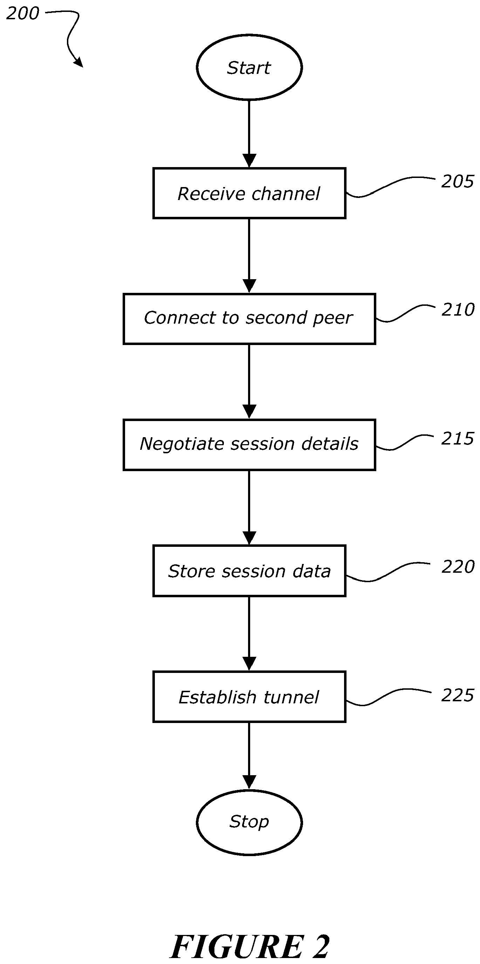

**Figure 2** shows a method 200 for establishing a tunnel between the first peer 105 and the second peer 115. First peer 105 receives 205 a channel associated to second peer 115. First peer 105 connects to second peer 115 using security provisions over the channel associated to second peer 115.

First peer 105 and second peer 115 negotiate 215 the details of a VPN session. In an embodiment the details include one of more of a session key with an identifier, an identifier for the new tunnel, an initial primary packet sequence identifier for the first 20 packets, details of the channel over which the connection will be made.

In an embodiment the negotiated session details are stored 220 in a session table associated to the first peer 105 and/or stored in a session table associated to the second peer 115.

The tunnel is established 225 between the first peer 105 and second peer 115. In an embodiment the method 200 is repeated so as to establish a plurality of tunnels between the first peer 105 and the second peer 115.

In an embodiment, when the initiator/first peer 105 establishes a session, the first peer 105 indicates to the responder/second peer 115 that it supports a protocol that permits duplicate data packets to be sent over multiple tunnels. This avoids the need for the responder/second peer 115 to be preconfigured with knowledge of the shared sequence/packet duplication. The responder/second peer 115 will also then selectively duplicate user data heading from it to the initiator.

The duplication of data packets is described in more detail below.

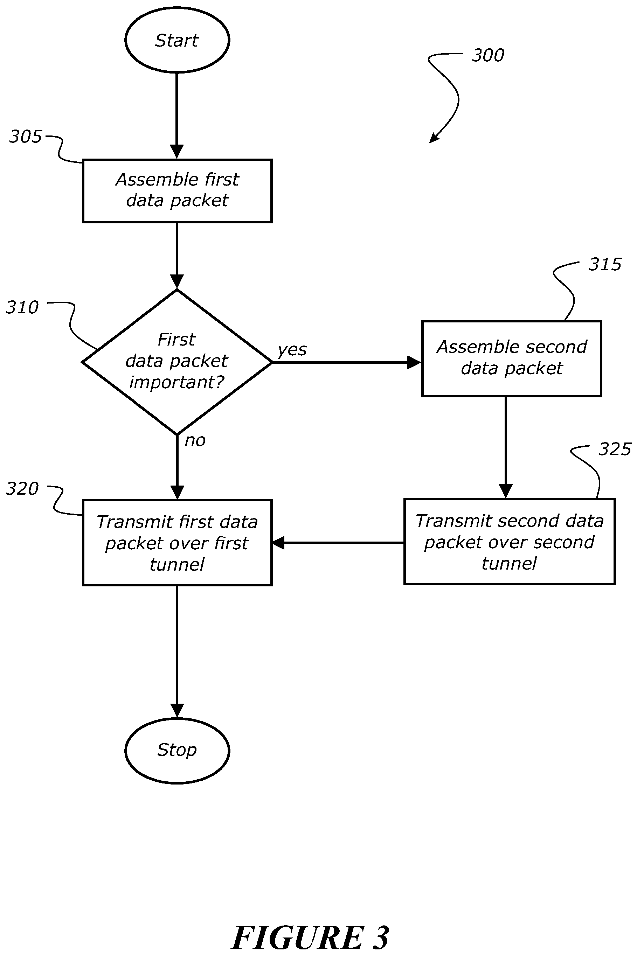

**Figure 3** shows an example method 300 for transmitting a data packet from a peer. The method 300 is described in relation to the first peer 105. It will be appreciated that the same method is used to transmit a data packet from the second peer 115.

The first peer 105 assembles 305 a first data packet. Process 305 is described in more detail below.

The first peer 105 checks 310 to ascertain whether or not the data to be transmitted is critical or important. In an embodiment the data is checked to determine whether it meets an importance threshold. The importance threshold is typically user-defined.

In an embodiment the importance threshold is user-defined for example specifying in configuration files how to mark traffic as critical.

One example of an importance threshold is a purpose or application associated to the transfer of data between first peer 105 and second peer 115. For example, anything in real time, in particular Voice over IP (VoIP) and video calls, is critical. Other applications such as card payment transactions may also be deemed critical. On the other hand, applications such as web traffic or file uploads are not critical.

In this example the importance threshold test comprises 'Does the application associated to a data packet match at least one predefined application selected from voice, video and card payment transactions? If so, the data packet satisfies the importance threshold and is deemed critical. If not, the data packet does not satisfy the importance threshold'.

Another example of an importance threshold test comprises 'Does the application associated to a data packet involve operate in real time? If so, the data packet satisfies the importance threshold and is deemed critical. If not, the data packet does not satisfy the importance threshold'.

In an embodiment the importance threshold is set as IP traffic with an 'expedited forwarding' (EF) DSCP value set. In this example the threshold test comprises 'Does the Internet Protocol (IP) header associated to a data packet have a DSCP EF flag set? If so, the data packet satisfies the importance threshold and is deemed critical. If not, the data packet does not satisfy the importance threshold'.

In an embodiment the importance threshold is set by defining values of a 5-tuple including IP protocol, sender IP, sender port, destination IP, destination port.

In this example the threshold test comprises 'Does the value of at least one of the IP protocol, sender IP, sender port, destination IP, and destination port associated to a data packet match a predefined value? If so, the data packet satisfies the importance threshold and is deemed critical. If not, the data packet does not satisfy the importance threshold'.

In this example another example of threshold test comprises 'Does the value of each of the IP protocol, sender IP, sender port, destination IP, and destination port associated to a data packet match respective predefined values? If so, the data packet satisfies the importance threshold and is deemed critical. If not, the data packet does not satisfy the importance threshold'.

If the first data packet 305 contains critical data the first peer 105 assembles 315 a second data packet. In an embodiment the second data packet is a duplicate of the first data packet.

Whether or not the first data packet 305 contains critical data, the first peer 105 transmits 320 the first data packet over a first tunnel. In an embodiment the second peer 115 receives the first data packet as will be further described below.

In an embodiment the first data packet 305 includes a first tunnel identifier associated to the first tunnel. The first tunnel identifier signals to all components of the network 100 that the first data packet is to be, and has been, transmitted within the first tunnel. An example of the first tunnel is tunnel 130.

In an embodiment the first data packet further includes a first primary packet sequence identifier. As described above negotiation 215 of the details of a VPN session includes determining an initial primary packet sequence identifier in addition to a tunnel identifier.

In an embodiment the first primary packet sequence identifier is unique within the first tunnel. It is derived by incrementing either an initial primary packet sequence identifier or a previous primary packet sequence identifier.

Where the first data packet contains critical data, the first peer 105 transmits 325 the second data packet over a second tunnel.

In an embodiment the second data packet includes a second tunnel identifier associated to the second tunnel. The second tunnel identifier signals to all components of the network 100 that the second data packet is to be, and has been, transmitted within the second tunnel. An example of the second tunnel is tunnel 135.

In an embodiment the second data packet further includes a second primary packet sequence identifier. In an embodiment the second primary packet sequence identifier is unique within the second tunnel. It is derived by incrementing either an initial primary packet sequence identifier within the second tunnel or a previous primary packet sequence identifier associated to the second tunnel.

In an embodiment the first data packet and the second data packet both include a common secondary packet sequence identifier. The presence of a secondary packet sequence identifier within a data packet indicates to all components of the network 100 that the data packet is a duplicate. The value of the common secondary packet sequence identifier indicates to all components of the network 100 that a pair of data packets are duplicates of each other.

In an embodiment the first peer 105 as initiator peer determines an initial value for the secondary packet sequence identifier. The secondary packet sequence identifier is incremented each time a sending peer has a critical data packet requiring duplication. An example of an initial value for the secondary packet sequence identifier is the value '1'. An example of incrementing the secondary packet sequence identifier includes adding the value '1' to the current value of the secondary packet sequence identifier.

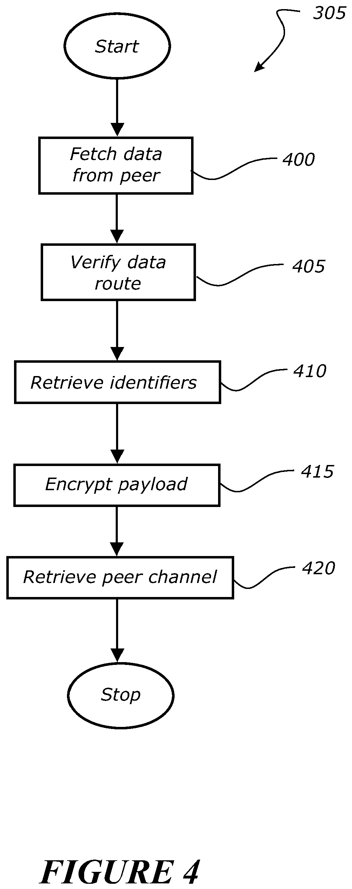

**Figure 4** shows a method for assembling 305 the data packet described above with reference to figure 3.

The data to be transmitted is fetched 400 from the first peer 105 and formed into at least one data packet. The first peer 105 has available to it details of the tunnel through which data packets encapsulating the fetched data will be sent. The data route through the tunnel is verified 405 in relation to a data packet. If the data route cannot be verified then the packet is discarded.

Identifiers required for the data packet are retrieved 410 from session details stored in a session table maintained in computer memory. Session details maintained in the session table include information about a peer such as its IP address, encryption/decryption keys, a current primary packet sequence identifier, and a current secondary packet sequence identifier. In an embodiment the identifiers include one or more of a session identifier, a tunnel identifier, a primary packet sequence identifier.

In an embodiment the payload of the data packet is encrypted 415 with a key using at least some of the above identifiers.

The correct peer channel for the tunnel is then retrieved 420 as the address retrieved from the last incoming packet.

In an embodiment a user defines in advance which channels to send critical data over. For example a default setting may comprise send data packets over all available channels between first peer 105 and second peer 115.

The user may wish to only send over specific channels. In one example the user might have available a first channel comprising a fibre internet connection, a second channel comprising a fibre internet connection, and a third channel comprising a cellular connection as a backup. Cellular networks typically charge by the amount of traffic sent. The user may wish to send duplicated critical data over the first channel and the second channel but not the third channel in an effort to minimise cost.

The data packet is then transmitted 320 as described above with reference to figure 3. In an embodiment the data packet is transmitted to the second peer 115.

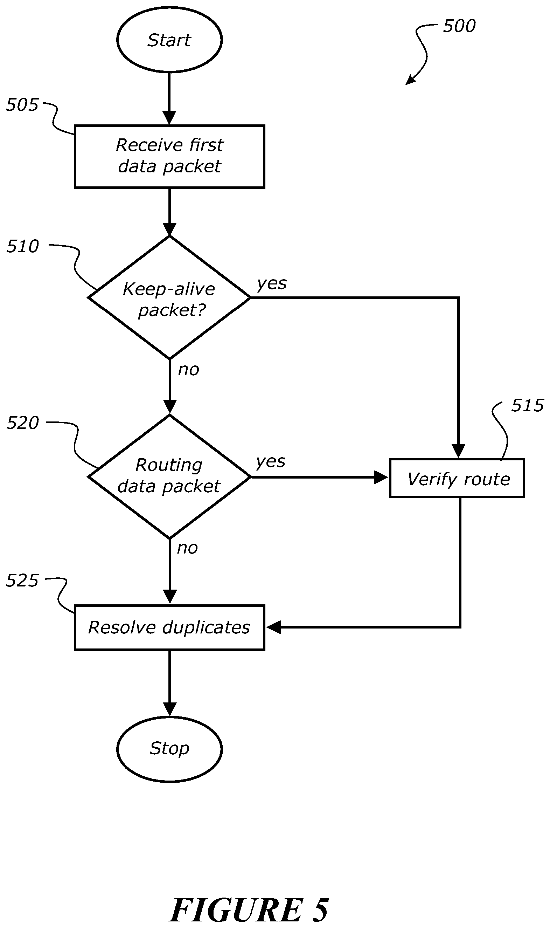

**Figure 5** shows an example method 500 of resolving data packets received at a peer. The method 500 is described in relation to the second peer 115. It will be appreciated that the same method is used to transmit a data packet from the first peer 105.

A first data packet is received 505 at the second peer 115. The second peer 115 performs processing on the first data packet as will be further described below.

In an embodiment the first data packet includes an indicator of packet type. Examples of packet types include encapsulated network content packets, keep-alive packets, and routing table packets.

The first data packet is checked 510 to determine whether the first data packet is a keep-alive packet. A keep-alive packet contains information that is extracted from a peer. The keep-alive packet is either responded to or used to update a peer state.

In an embodiment a keep-alive packet is transmitted intermittently during normal use and also when a tunnel is not otherwise being used. The keep-alive packet may include a first routing version identifier.

Where the first data packet is a keep-alive packet, the route associated to the first data packet is verified 515. The first routing version identifier represents a version of a routing table associated to the first peer 105. The first routing version identifier is checked against a routing version identifier maintained in routing table 150 associated to second peer 115.

There may be periods when there is no traffic through a tunnel, and therefore no information as to whether a given tunnel is actually working. One function of the keep-alive packets is to detect that a tunnel is operational.

Where there is a match between the routing version identifiers in the first data packet and the routing table 150 respectively, the second peer 115 transmits a simple response data packet that confirms the tunnel is still operational.

Routes may not remain constant and there is therefore a need to advise the peers at each end of a tunnel of any changes which occur at either end. On detecting a mismatch between the routing version identifiers in the first data packet and the routing table 150 respectively, the second peer 115 transmits a routing table packet.

A routing table packet is a packet that is sent, for example, when the second peer 115 detects from reading a keep-alive packet that the routing table for this tunnel is in error. In an embodiment the second peer 115 returns a routing table packet containing the actual current version of its routing table and an array carrying the entries in the routing table.

If the first data packet is a routing table data packet 520, for example received at the second peer 115 from the first peer 105, the routing table associated to the second peer 115 is updated by updating the routing table 150. This change has the effect of changing the version number.

In an embodiment the method includes resolving 525 duplicates. Keep-alive packets and routing table packets would not normally contain critical data so would not usually be duplicated. Other types of packets are checked to detect the presence of a shared secondary packet sequence identifier within two or more data packets received at the second peer 115.

Where two or more data packets include a shared secondary packet sequence identifier one or more of the data packets is discarded so that only one data packet remains having the secondary packet sequence identifier.

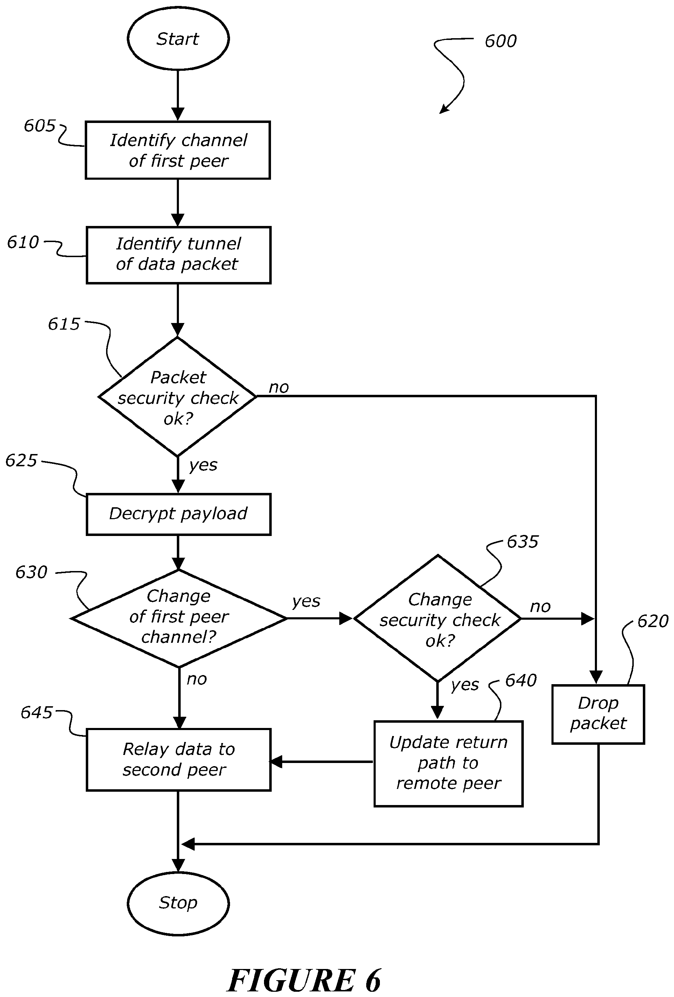

**Figure 6** shows an example of a method 600 for processing a first data packet when received by the second peer 115 as described above with reference to figure 5.

The channel on which the data packet was received is identified 605. The data packet header is examined to identify 610 that the tunnel identifier is that of an agreed upon tunnel.

A security check is performed 615 on the data packet. In an embodiment the security check comprises a comparison of a hash check of the complete packet with a hash derived from parameters in the packet header. Examples of parameters include a protocol version, a packet type, a tunnel id and a sequence id. If the data packet is found to be not intact it is dropped 620.

Examples of checks carried out on the data packet include one or more of:
- verifying that the tunnel identifier corresponds to an existing tunnel;
- verifying that the payload is encrypted if the packet type requires encryption;
- verifying that the sequence identifier is greater than the last verified sequence identifier but less than a specified maximum count greater;
- verifying that the integrity check value (ICV) is correct, the value including as factors at least the data payload, the protocol version, the tunnel identifier, the sequence identifier and the packet type.

If the data packet is intact the payload within the data packet is decrypted 625, using a key and initialisation vector that is partly dependent on the contents of the header of the data packet.

The first peer channel is checked by comparing the received channel with that negotiated and stored in routing table 150. On detecting a change 630 of the first peer channel, a security check is performed 635. If the change in channel satisfies a security check and verified as valid, the return path is updated 640 in the routing table.

On detecting no change in first peer channel, or on updating a change in first peer channel, the data within the data packet is relayed 645 to the second peer.

An example format for a data packet is set out below:

| Byte | Name | Data Type | Description |
|---|---|---|---|
| 0 | protocol version | unsigned 1-byte integer | Protocol version |
| 1 | packet type | unsigned 1-byte integer | Some packet types may not carry encrypted payloads |
| 2-4 | tunnel id | unsigned 4-byte integer | Locally scoped identifier for the end of the tunnel |
| 5-8 | primary packet sequence ID | unsigned 4-byte integer | Sequence assisting in receipt confirmation check and one salt for the encryption |
| 9-12 | secondary packet sequence ID | unsigned 4-byte integer | Sequence assisting in critical data receipt and deduplication. Optional. |
| 13 | key id | unsigned 1-byte integer | Specifies which session key to use when decrypting the payload and checking the sequence id |
| 14-30 | aes-gcm tag | opaque 16-byte value | Used by the authenticated encryption with associated data (AEAD) algorithm to detect tampering |
| 31-N | payload | arbitrary length encrypted payload | The encrypted payload itself, with padding where applicable |

The above data packet includes at byte 0 the version of the protocol, at byte 1 the packet type which may typically indicate encapsulated network content, a keep-alive packet, a routing table packet or some other option.

Bytes 2-4 hold the tunnel identifer for this end of the tunnel, the scope being easily large enough to cater for the several thousand tunnels expected of a large local network using a VPN concentrator.

Bytes 5-8 provide a recycling primary packet sequence identifier for each tunnel packet. Bytes 9-12 are used to represent a secondary packet sequence identifier where data packets are duplicated. Byte 13 is the key identifying the session identifier.

Bytes 14-30 provide a data check value derived by calculation from at least the payload content, the protocol version, the tunnel identifier, the sequence identifier and the packet type. If this value does not match that calculated using the same items at the receiving end the packet is deemed corrupt or contrived.

The bytes from 31 onwards contain the payload, which is typically an encrypted network packet, but may be a packet with other content, specified in the packet type field.

The content of differing packet types is treated differently. A data packet contains information to be transferred onwards to a destination client, a keep-alive packet contains information which is extracted by the local peer and either responded to or used to update the local peer state, a routing packet will contain information which is again extracted by the local peer and may be used to update or confirm routing at the remote peer. Other packet types may be provided for.

An example of a data format for a keep-alive packet is set out below:

| **Byte** | **Name** | **Data Type** | **Description** |
|---|---|---|---|
| 0-3 | keep-alive sequence id | unsigned 4-byte integer | |
| 4-5 | timestamp | unsigned 2-byte integer | Contains a partial timestamp of the time the request was made |
| 6 | remote-routing table version | unsigned 1-byte integer | The version of the local peer's routing table that the remote peer knows about. |

In an embodiment the keep-alive packet is a packet which is sent encrypted as the payload content of a data packet intermittently during normal use and also when the VPN tunnel is not otherwise being used.

Bytes 0-3 represent a keep-alive sequence identifier which is a recycling integer. Bytes 4-5 represent a timestamp indicating when the packet was created.

Byte 6 represents a remote routing table version which is the version of the local routing table which is currently recorded as held by the initiating peer. The routing table version comprises a single byte and hence will wrap around comparatively frequently.

An example data format for routing table packet is shown below:

| **Field** | **Data Type** | **Description** |
|---|---|---|
| routing-table-version | unsigned 1-byte integer | The version of the sender's routing table |
| routing-table-entry[ ] | variable length | zero or more routing table entries |

The routing table packet is a packet which is sent as the payload content of data packet when, for example, a remote peer detects from reading a keep-alive packet that the routing table for this tunnel is in error.

In an embodiment the routing table packet includes a 1-byte integer representing an actual current version of its routing table and a variable length array representing a plurality of routing table entries in the routing table.

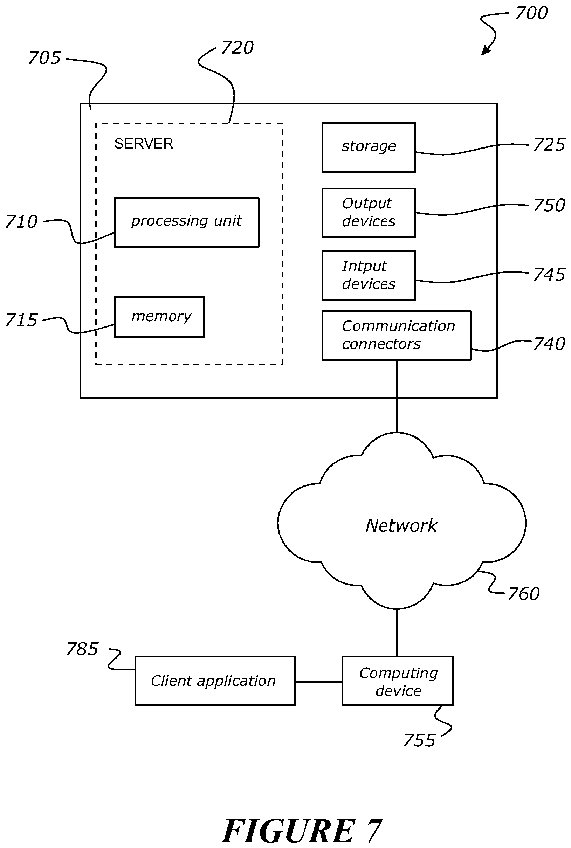

**Figure 7** shows an embodiment of a suitable computing device to implement embodiments of one or more components of the network 100 of figure 1. These components include one or more of the first peer 105, the routing table 145, the ranking module 155, the duplication engine 160, the second peer 115, the routing table 150, the duplication engine 165, the routing engine 170.

The computing device of Figure 7 is an example of a suitable computing device. It is not intended to suggest any limitation as to the scope of use or functionality of the operating environment.

Example computing devices include, but are not limited to, personal computers, server computers, hand-held or laptop devices, mobile devices, multiprocessor systems, consumer electronics, mini computers, mainframe computers, and distributed computing environments that include any of the above systems or devices. Examples of mobile devices include mobile phones, tablets, and Personal Digital Assistants (PDAs).

Although not required, embodiments are described in the general context of 'computer readable instructions' being executed by one or more computing devices. In an embodiment, computer readable instructions are distributed via tangible computer readable media.

In an embodiment, computer readable instructions are implemented as program modules. Examples of program modules include functions, objects, Application Programming Interfaces (APIs), and data structures that perform particular tasks or implement particular abstract data types. Typically, the functionality of the computer readable instructions is combined or distributed as desired in various environments.

Shown in figure 7 is a system 700 comprising a computing device 705 configured to implement one or more embodiments described above. In an embodiment, computing device 705 includes at least one processing unit 710 and memory 715. Depending on the exact configuration and type of computing device, memory 715 is volatile (such as RAM, for example), non-volatile (such as ROM, flash memory, etc., for example) or some combination of the two.

A server 720 is shown by a dashed line notionally grouping processing unit 710 and memory 715 together.

In an embodiment, computing device 705 includes additional features and/or functionality.

One example is removable and/or non-removable additional storage including, but not limited to, magnetic storage and optical storage. Such additional storage is illustrated in Figure 7 as storage 725. In an embodiment, computer readable instructions to implement one or more embodiments provided herein are maintained in storage 725. In an embodiment, storage 725 stores other computer readable instructions to implement an operating system and/or an application program. Computer readable instructions are loaded into memory 715 for execution by processing unit 710, for example.

Memory 715 and storage 725 are examples of computer storage media. Computer storage media includes, but is not limited to, RAM, ROM, EEPROM, flash memory or other memory technology, CD-ROM, Digital Versatile Disks (DVDs) or other optical storage, magnetic cassettes, magnetic tape, magnetic disk storage or other magnetic storage devices, or any other medium which can be used to store the desired information and which can be accessed by computing device 705. Any such computer storage media may be part of device 705.

In an embodiment, computing device 705 includes at least one communication connection 740 that allows device 705 to communicate with other devices. The at least one communication connection 740 includes one or more of a modem, a Network Interface Card (NIC), an integrated network interface, a radio frequency transmitter/receiver, an infrared port, a USB connection, or other interfaces for connecting computing device 705 to other computing devices.

In an embodiment, the communication connection(s) 740 facilitate a wired connection, a wireless connection, or a combination of wired and wireless connections. Communication connection(s) 740 transmit and/or receive communication media.

Communication media typically embodies computer readable instructions or other data in a "modulated data signal" such as a carrier wave or other transport mechanism and includes any information delivery media. The term "modulated data signal" includes a signal that has one or more of its characteristics set or changed in such a manner as to encode information in the signal.

In an embodiment, device 705 includes at least one input device 745 such as keyboard, mouse, pen, voice input device, touch input device, infrared cameras, video input devices, and/or any other input device. In an embodiment, device 705 includes at least one output device 750 such as one or more displays, speakers, printers, and/or any other output device.

Input device(s) 745 and output device(s) 750 are connected to device 705 via a wired connection, wireless connection, or any combination thereof. In an embodiment, an input device or an output device from another computing device is/are used as input device(s) 745 or output device(s) 750 for computing device 705.

In an embodiment, components of computing device 705 are connected by various interconnects, such as a bus. Such interconnects include one or more of a Peripheral Component Interconnect (PCI), such as PCI Express, a Universal Serial Bus (USB), firewire (IEEE 13104), and an optical bus structure. In an embodiment, components of computing device 705 are interconnected by a network. For example, memory 715 in an embodiment comprises multiple physical memory units located in different physical locations interconnected by a network.

It will be appreciated that storage devices used to store computer readable instructions may be distributed across a network. For example, in an embodiment, a computing device 755 accessible via a network 760 stores computer readable instructions to implement one or more embodiments provided herein. Computing device 705 accesses computing device 755 in an embodiment and downloads a part or all of the computer readable instructions for execution. Alternatively, computing device 705 downloads portions of the computer readable instructions, as needed. In an embodiment, some instructions are executed at computing device 705 and some at computing device 755.

In an embodiment a client application 785 enables a user experience and user interface. In an embodiment, the client application 785 is provided as a thin client application configured to run within a web browser. The client application 785 is shown in figure 7 associated to computing device 755. It will be appreciated that application 785 in an embodiment is associated to computing device 705 or another computing device.

The foregoing description of the invention includes preferred forms thereof. Modifications may be made thereto without departing from the scope of the invention.

## Claims

1. A method of transmitting data between a first peer (105) and a second peer (115) comprising:
negotiating details of first and second virtual private network, VPN, tunnelling sessions (130, 135), the first VPN tunnelling session having a first tunnel identifier and the second VPN tunnelling session having a second tunnel identifier;
on determining that the data satisfies an importance threshold:
transmitting (320), from the first peer (105), a first data packet within the first VPN tunnelling session (130), the first data packet having the first tunnel identifier associated to the first tunnelling session (130) signalling that the first data packet is to be, and has been, transmitted within the first tunnelling session (130), a first primary packet sequence identifier unique within the first VPN tunnelling session (130), and a secondary packet sequence identifier; and
transmitting (325), from the first peer (105), a second data packet within the second VPN tunnelling session (135), the second data packet having the second tunnel identifier associated to the second tunnelling session (135) signalling that the second data packet is to be, and has been, transmitted within the second tunnelling session (135), a second primary packet sequence identifier unique within the second VPN tunnelling session (135), and the secondary packet sequence identifier;
wherein the presence of the secondary packet sequence identifier within the first data packet indicates that the first data packet is a duplicate, and wherein the presence of the secondary packet sequence identifier within the second data packet indicates that the second data packet is a duplicate, such that the first data packet or the second data packet can be discarded on determining that both the first data packet and the second data packet include the secondary packet sequence identifier; and
wherein the first data packet includes a routing version identifier associated to the first data packet, the method further comprising transmitting a routing table packet on determining a mismatch between a first routing version identifier and the routing version identifier associated to the first data packet, wherein the routing table packet comprises an integer representing an actual current version of routing table and a variable length array representing a plurality of routing table entries in the routing table

2. The method of claim 1, comprising:
on determining that the data does not satisfy the importance threshold:
transmitting (310), from the first peer (105), a first data packet within the first tunnelling session (130), the first data packet having a first tunnel identifier associated to the first tunnelling session (130), and a first primary packet sequence identifier.

3. The method of claim 2 wherein the importance threshold is user defined.

4. The method of claim 2 or claim 3 wherein the first tunnelling session (130) is associated to a first route, the first route associated to the first routing version identifier representing a version of the routing table associated to the first peer (105), the first routing version identifier maintained in computer memory associated to the first peer (105), the method optionally further comprising maintaining the first routing version identifier in computer memory within a routing table.

5. The method of any one of the preceding claims wherein the first data packet comprises one of a network content packet, a keep-alive packet and the routing table packet..

6. The method of any one of the preceding claims wherein the second data packet comprises a network content packet.

7. The method of any one of the preceding claims wherein the first data packet comprises a keep-alive packet, the keep-alive packet including the first routing version identifier.

8. A method of resolving data satisfying an importance threshold transmitted between a first peer (105) and a second peer (115) comprising:
negotiating details of first and second virtual private network, VPN, tunnelling sessions (130, 135), the first VPN tunnelling session having a first tunnel identifier and the second VPN tunnelling session having a second tunnel identifier;
receiving, at the second peer, a first data packet within the first VPN tunnelling session (130), the first data packet having the first tunnel identifier associated to the first tunnelling session (130) signalling that the first data packet is to be, and has been, transmitted within the first tunnelling session (130), a first primary packet sequence identifier unique within the first VPN tunnelling session (130), and a secondary packet sequence identifier;
receiving (505), at the second peer, a second data packet within the second VPN tunnelling session (135), the second data packet having a second tunnel identifier associated to the second tunnelling session (135) signalling that the second data packet is to be, and has been, transmitted within the second tunnelling session (135), a second primary packet sequence identifier unique within the second VPN tunnelling session (135), and the secondary packet sequence identifier; and
discarding (525) the first data packet or the second data packet on determining that both the first data packet and the second data packet include the secondary packet sequence identifier indicating that the first data packet and the second data packets are duplicate;
wherein the first data packet includes a routing version identifier associated to the first data packet, the method further comprising transmitting a routing table packet on determining a mismatch between a first routing version identifier and the routing version identifier associated to the first data packet, wherein the routing table packet comprises an integer representing an actual current version of routing table and a variable length array representing a plurality of routing table entries in the routing table.

9. The method of claim 8 wherein the first tunnelling session (130) is associated to a first route, the first route associated to the first routing version identifier representing a version of a routing table associated to the first peer (105), the first routing version identifier maintained in computer memory associated to the second peer.

10. The method of claim 8 or 9 , comprising maintaining the first routing version identifier in computer memory within a routing table.

11. The method of any one of claims 8 to 10 wherein the first data packet comprises a keep-alive packet.

12. A data network configured to resolve data satisfying an importance threshold received from a first peer (105), the network comprising:
a second peer (115) configured to:
negotiate details of first and second virtual private network, VPN, tunnelling sessions (130, 135), the first VPN tunnelling session having a first tunnel identifier and the second VPN tunnelling session having a second tunnel identifier;
receive (505) a first data packet within a first tunnelling session (130), the first data packet having a first tunnel identifier associated to the first tunnelling session (130) signalling that the first data packet is to be, and has been, transmitted within the first tunnelling session (130), a first primary packet sequence identifier unique within the first VPN tunnelling session (130), and a secondary packet sequence identifier, and
receive a second data packet within a second tunnelling session (135), the second data packet having a second tunnel identifier associated to the second tunnelling session (135) signalling that the second data packet is to be, and has been, transmitted within the second tunnelling session (135), a second primary packet sequence identifier unique within the second VPN tunnelling session (135), and the secondary packet sequence identifier;
a duplication engine (165) configured to discard (525) the first data packet or the second data packet on determining that both the first data packet and the second data packet include the secondary packet sequence identifier indicating that the first data packet and the second data packets are duplicate; and
wherein the first data packet includes a routing version identifier associated to the first data packet, the second peer (115) comprising a routing engine (170) transmitting a routing table packet on determining a mismatch between a first routing version identifier and the routing version identifier associated to the first data packet, wherein the routing table packet comprises an integer representing an actual current version of routing table and a variable length array representing a plurality of routing table entries in the routing table.

13. A computer readable medium having stored thereon computer-executable instructions that, when executed by a processor, cause the processor to perform a method according to any of claims 1 to 11.

## Patentansprüche

1. Verfahren zum Übertragen von Daten zwischen einem ersten Peer (105) und einem zweiten Peer (115), umfassend:
Verhandeln von Details einer ersten und einer zweiten Tunnelsitzung (130, 135) eines virtuellen privaten Netzwerks, VPN, wobei die erste VPN-Tunnelsitzung eine erste Tunnelkennung aufweist und die zweite VPN-Tunnelsitzung eine zweite Tunnelkennung aufweist;
beim Bestimmen, dass die Daten einen Wichtigkeitsschwellenwert erfüllen:
Übertragen (320), von dem ersten Peer (105), eines ersten Datenpakets innerhalb der ersten VPN-Tunnelsitzung (130), wobei das erste Datenpaket die erste, der ersten Tunnelsitzung (130) zugeordnete Tunnelkennung, die signalisiert, dass das erste Datenpaket innerhalb der ersten Tunnelsitzung (130) übertragen werden soll und worden ist, eine erste primäre Paketsequenzkennung, die innerhalb der ersten VPN-Tunnelsitzung (130) eindeutig ist, und eine sekundäre Paketsequenzkennung aufweist; und
Übertragen (325), von dem ersten Peer (105), eines zweiten Datenpakets innerhalb der zweiten VPN-Tunnelsitzung (135), wobei das zweite Datenpaket die zweite, der zweiten Tunnelsitzung (135) zugeordnete Tunnelkennung, die signalisiert, dass das zweite Datenpaket innerhalb der zweiten Tunnelsitzung (135) übertragen werden soll und worden ist, eine zweite primäre Paketsequenzkennung, die innerhalb der zweiten VPN-Tunnelsitzung (135) eindeutig ist, und die sekundäre Paketsequenzkennung aufweist;
wobei das Vorhandensein der sekundären Paketsequenzkennung innerhalb des ersten Datenpakets angibt, dass das erste Datenpaket ein Duplikat ist, und wobei das Vorhandensein der sekundären Paketsequenzkennung innerhalb des zweiten Datenpakets angibt, dass das zweite Datenpaket ein Duplikat ist, sodass das erste Datenpaket oder das zweite Datenpaket verworfen werden kann, wenn bestimmt wird, dass sowohl das erste Datenpaket als auch das zweite Datenpaket die sekundäre Paketsequenzkennung beinhalten; und
wobei das erste Datenpaket eine dem ersten Datenpaket zugeordnete Routing-Versionskennung beinhaltet, wobei das Verfahren ferner das Übertragen eines Routing-Tabellenpakets umfasst, wenn eine Nichtübereinstimmung zwischen einer ersten Routing-Versionskennung und der dem ersten Datenpaket zugeordneten Routing-Versionskennung bestimmt wird, wobei das Routing-Tabellenpaket eine ganze Zahl, die eine tatsächliche aktuelle Version der Routing-Tabelle darstellt, und ein Array mit variabler Länge, das eine Vielzahl von Routing-Tabelleneinträgen in der Routing-Tabelle darstellt, umfasst.

2. Verfahren nach Anspruch 1, umfassend:
beim Bestimmen, dass die Daten den Wichtigkeitsschwellenwert nicht erfüllen:
Übertragen (310), von dem ersten Peer (105), eines ersten Datenpakets innerhalb der ersten Tunnelsitzung (130), wobei das erste Datenpaket eine erste, der ersten Tunnelsitzung (130) zugeordnete Tunnelkennung und eine erste primäre Paketsequenzkennung aufweist.

3. Verfahren nach Anspruch 2, wobei der Wichtigkeitsschwellenwert benutzerdefiniert ist.

4. Verfahren nach Anspruch 2 oder Anspruch 3, wobei die erste Tunnelsitzung (130) einer ersten Route zugeordnet ist, wobei die erste Route, die der ersten Routing-Versionskennung zugeordnet ist, eine Version der dem ersten Peer (105) zugeordneten Routing-Tabelle darstellt, wobei die erste Routing-Versionskennung in dem dem ersten Peer (105) zugeordneten Computerspeicher beibehalten wird, wobei das Verfahren optional ferner das Beibehalten der ersten Routing-Versionskennung in dem Computerspeicher innerhalb einer Routing-Tabelle umfasst.

5. Verfahren nach einem der vorhergehenden Ansprüche, wobei das erste Datenpaket eines von einem Netzwerkinhaltspaket, einem Keep-Alive-Paket und dem Routing-Tabellenpaket umfasst.

6. Verfahren nach einem der vorhergehenden Ansprüche, wobei das zweite Datenpaket ein Netzwerkinhaltspaket umfasst.

7. Verfahren nach einem der vorhergehenden Ansprüche, wobei das erste Datenpaket ein Keep-Alive-Paket umfasst, wobei das Keep-Alive-Paket die erste Routing-Versionskennung beinhaltet.

8. Verfahren zum Auflösen von Daten, die einen Wichtigkeitsschwellenwert erfüllen, der zwischen einem ersten Peer (105) und einem zweiten Peer (115) übertragen wird, umfassend:
Verhandeln von Details einer ersten und einer zweiten Tunnelsitzung (130, 135) eines virtuellen privaten Netzwerks, VPN, wobei die erste VPN-Tunnelsitzung eine erste Tunnelkennung aufweist und die zweite VPN-Tunnelsitzung eine zweite Tunnelkennung aufweist;
Empfangen, an dem zweiten Peer, eines ersten Datenpakets innerhalb der ersten VPN-Tunnelsitzung (130), wobei das erste Datenpaket die erste, der ersten Tunnelsitzung (130) zugeordnete Tunnelkennung, die signalisiert, dass das erste Datenpaket innerhalb der ersten Tunnelsitzung (130) übertragen werden soll und worden ist, eine erste primäre Paketsequenzkennung, die innerhalb der ersten VPN-Tunnelsitzung (130) eindeutig ist, und eine sekundäre Paketsequenzkennung aufweist;
Empfangen (505), an dem zweiten Peer, eines zweiten Datenpakets innerhalb der zweiten VPN-Tunnelsitzung (135), wobei das zweite Datenpaket eine zweite, der zweiten Tunnelsitzung (135) zugeordnete Tunnelkennung, die signalisiert, dass das zweite Datenpaket innerhalb der zweiten Tunnelsitzung (135) übertragen werden soll und worden ist, eine zweite primäre Paketsequenzkennung, die innerhalb der zweiten VPN-Tunnelsitzung (135) eindeutig ist, und die sekundäre Paketsequenzkennung aufweist; und
Verwerfen (525) des ersten Datenpakets oder des zweiten Datenpakets, wenn bestimmt wird, dass sowohl das erste Datenpaket als auch das zweite Datenpaket die sekundäre Paketsequenzkennung beinhalten, die angibt, dass das erste Datenpaket und die zweiten Datenpakete dupliziert sind;
wobei das erste Datenpaket eine dem ersten Datenpaket zugeordnete Routing-Versionskennung beinhaltet, wobei das Verfahren ferner das Übertragen eines Routing-Tabellenpakets umfasst, wenn eine Nichtübereinstimmung zwischen einer ersten Routing-Versionskennung und der dem ersten Datenpaket zugeordneten Routing-Versionskennung bestimmt wird, wobei das Routing-Tabellenpaket eine ganze Zahl, die eine tatsächliche aktuelle Version der Routing-Tabelle darstellt, und ein Array mit variabler Länge, das eine Vielzahl von Routing-Tabelleneinträgen in der Routing-Tabelle darstellt, umfasst.

9. Verfahren nach Anspruch 8, wobei die erste Tunnelsitzung (130) einer ersten Route zugeordnet ist, wobei die erste Route, die der ersten Routing-Versionskennung zugeordnet ist, eine Version einer dem ersten Peer (105) zugeordneten Routing-Tabelle darstellt, wobei die erste Routing-Versionskennung in dem dem zweiten Peer zugeordneten Computerspeicher beibehalten wird.

10. Verfahren nach Anspruch 8 oder 9 , umfassend das Beibehalten der ersten Routing-Versionskennung in dem Computerspeicher innerhalb einer Routing-Tabelle.

11. Verfahren nach einem der Ansprüche 8 bis 10, wobei das erste Datenpaket ein Keep-Alive-Paket umfasst.

12. Datennetzwerk, das dazu konfiguriert ist, Daten aufzulösen, die einen Wichtigkeitsschwellenwert erfüllen, der von einem ersten Peer (105) empfangen wird, wobei das Netzwerk Folgendes umfasst:
einen zweiten Peer (115), der zu Folgendem konfiguriert ist:
Verhandeln von Details einer ersten und einer zweiten Tunnelsitzung (130, 135) eines virtuellen privaten Netzwerks, VPN, wobei die erste VPN-Tunnelsitzung eine erste Tunnelkennung aufweist und die zweite VPN-Tunnelsitzung eine zweite Tunnelkennung aufweist;
Empfangen (505) eines ersten Datenpakets innerhalb einer ersten Tunnelsitzung (130), wobei das erste Datenpaket eine erste, der ersten Tunnelsitzung (130) zugeordnete Tunnelkennung, die signalisiert, dass das erste Datenpaket innerhalb der ersten Tunnelsitzung (130) übertragen werden soll und worden ist, eine erste primäre Paketsequenzkennung, die, innerhalb der ersten VPN-Tunnelsitzung (130) eindeutig ist, und eine sekundäre Paketsequenzkennung aufweist, und
Empfangen eines zweiten Datenpakets innerhalb einer zweiten Tunnelsitzung (135), wobei das zweite Datenpaket eine zweite, der zweiten Tunnelsitzung (135) zugeordnete Tunnelkennung, die signalisiert, dass das zweite Datenpaket innerhalb der zweiten Tunnelsitzung (135) übertragen werden soll und worden ist, eine zweite primäre Paketsequenzkennung, die innerhalb der zweiten VPN-Tunnelsitzung (135) eindeutig ist, und die sekundäre Paketsequenzkennung aufweist;
eine Duplizierungsmaschine (165), die dazu konfiguriert ist, das erste Datenpaket oder das zweite Datenpaket zu verwerfen (525), wenn bestimmt wird, dass sowohl das erste Datenpaket als auch das zweite Datenpaket die sekundäre Paketsequenzkennung beinhalten, die angibt, dass das erste Datenpaket und die zweiten Datenpakete dupliziert sind; und
wobei das erste Datenpaket eine dem ersten Datenpaket zugeordnete Routing-Versionskennung beinhaltet, wobei der zweite Peer (115) eine Routing-Maschine (170) umfasst, die ein Routing-Tabellenpaket überträgt, wenn eine Nichtübereinstimmung zwischen einer ersten Routing-Versionskennung und der dem ersten Datenpaket zugeordneten Routing-Versionskennung bestimmt wird, wobei das Routing-Tabellenpaket eine ganze Zahl, die eine tatsächliche aktuelle Version der Routing-Tabelle darstellt, und ein Array mit variabler Länge, das eine Vielzahl von Routing-Tabelleneinträgen in der Routing-Tabelle darstellt, umfasst.

13. Computerlesbares Medium mit darauf gespeicherten computerausführbaren Anweisungen die, wenn sie durch einen Prozessor ausgeführt werden, bewirken, dass der Prozessor ein Verfahren gemäß einem der Ansprüche 1 bis 11 durchführt.

## Revendications

1. Procédé de transmission de données entre un premier pair (105) et un second pair (115) comprenant :
la négociation de détails de première et seconde sessions de tunnellisation de réseau privé virtuel, VPN (130, 135), la première session de tunnellisation VPN ayant un premier identifiant de tunnel et la seconde session de tunnellisation VPN ayant un second identifiant de tunnel ;
lors de la détermination que les données satisfont à un seuil d'importance :
la transmission (320), à partir du premier pair (105), d'un premier paquet de données à l'intérieur de la première session de tunnellisation VPN (130), le premier paquet de données ayant le premier identifiant de tunnel associé à la première session de tunnellisation (130) signalant que le premier paquet de données doit être, et a été, transmis à l'intérieur de la première session de tunnellisation (130), un premier identifiant de séquence de paquets primaire unique à l'intérieur de la première session de tunnellisation VPN (130), et un identifiant de séquence de paquets secondaire ; et
la transmission (325), à partir du premier pair (105), d'un second paquet de données à l'intérieur de la seconde session de tunnellisation VPN (135), le second paquet de données ayant le second identifiant de tunnel associé à la seconde session de tunnellisation (135) signalant que le second paquet de données doit être, et a été, transmis à l'intérieur de la seconde session de tunnellisation (135), un second identifiant de séquence de paquets primaire unique à l'intérieur de la seconde session de tunnellisation VPN ( 135), et l'identifiant de séquence de paquets secondaire ;
dans lequel la présence de l'identifiant de séquence de paquets secondaire à l'intérieur du premier paquet de données indique que le premier paquet de données est un duplicata, et dans lequel la présence de l'identifiant de séquence de paquets secondaire à l'intérieur du second paquet de données indique que le second paquet de données est un duplicata, de sorte que le premier paquet de données ou le second paquet de données peut être rejeté lors de la détermination que le premier paquet de données et le second paquet de données comprennent tous deux l'identifiant de séquence de paquets secondaire ; et
dans lequel le premier paquet de données comprend un identifiant de version de routage associé au premier paquet de données, le procédé comprenant en outre la transmission d'un paquet de table de routage lors de la détermination d'une non-concordance entre un premier identifiant de version de routage et l'identifiant de version de routage associé au premier paquet de données, dans lequel le paquet de table de routage comprend un entier représentant une version actuelle réelle de la table de routage et un tableau de longueur variable représentant une pluralité d'entrées de table de routage dans la table de routage.

2. Procédé selon la revendication 1, comprenant :
lors de la détermination que les données ne satisfont pas au seuil d'importance :
la transmission (310), à partir du premier pair (105), d'un premier paquet de données à l'intérieur de la première session de tunnellisation (130), le premier paquet de données ayant un premier identifiant de tunnel associé à la première session de tunnellisation (130), et un premier identifiant de séquence de paquets primaire.

3. Procédé selon la revendication 2, dans lequel le seuil d'importance est défini par l'utilisateur.

4. Procédé selon la revendication 2 ou la revendication 3, dans lequel la première session de tunnellisation (130) est associée à une première route, la première route associée au premier identifiant de version de routage représentant une version de la table de routage associée au premier pair (105), le premier identifiant de version de routage maintenu dans la mémoire d'ordinateur associé au premier pair (105), le procédé comprenant en outre facultativement le maintien du premier identifiant de version de routage dans la mémoire d'ordinateur à l'intérieur d'une table de routage.

5. Procédé selon l'une quelconque des revendications précédentes, dans lequel le premier paquet de données comprend l'un d'un paquet de contenu de réseau, d'un paquet de maintien en activité et du paquet de table de routage.

6. Procédé selon l'une quelconque des revendications précédentes, dans lequel le second paquet de données comprend un paquet de contenu de réseau.

7. Procédé selon l'une quelconque des revendications précédentes, dans lequel le premier paquet de données comprend un paquet de maintien en activité, le paquet de maintien en activité comprenant le premier identifiant de version de routage.

8. Procédé de résolution de données satisfaisant à un seuil d'importance transmises entre un premier pair (105) et un second pair (115) comprenant :
la négociation de détails de première et seconde sessions de tunnellisation de réseau privé virtuel, VPN (130, 135), la première session de tunnellisation VPN ayant un premier identifiant de tunnel et la seconde session de tunnellisation VPN ayant un second identifiant de tunnel ;
la réception, au niveau du second pair, d'un premier paquet de données à l'intérieur de la première session de tunnellisation VPN (130), le premier paquet de données ayant le premier identifiant de tunnel associé à la première session de tunnellisation (13 0) signalant que le premier paquet de données doit être, et a été, transmis à l'intérieur de la première session de tunnellisation (130), un premier identifiant de séquence de paquets primaire unique à l'intérieur de la première session de tunnellisation VPN (130), et un identifiant de séquence de paquets secondaire ;
la réception (505), au niveau du second pair, d'un second paquet de données à l'intérieur de la seconde session de tunnellisation VPN (135), le second paquet de données ayant un second identifiant de tunnel associé à la seconde session de tunnellisation (135) signalant que le second paquet de données doit être, et a été, transmis à l'intérieur de la seconde session de tunnellisation (135), un second identifiant de séquence de paquets primaire unique à l'intérieur de la seconde session de tunnellisation VPN (135), et l'identifiant de séquence de paquets secondaire ; et
le rejet (525) du premier paquet de données ou du second paquet de données lors de la détermination que le premier paquet de données et le second paquet de données comprennent tous deux l'identifiant de séquence de paquets secondaire indiquant que le premi er paquet de données et le second paquet de données sont dupliqués ;
dans lequel le premier paquet de données comprend un identifiant de version de routage associé au premier paquet de données, le procédé comprenant en outre la transmission d'un paquet de table de routage lors de la détermination d'une non-concordance entre un premier identifiant de version de routage et l'identifiant de version de routage associé au premier paquet de données, dans lequel le paquet de table de routage comprend un entier représentant une version actuelle réelle de la table de routage et un tableau de longueur variable représentant une pluralité d'entrées de table de routage dans la table de routage.

9. Procédé selon la revendication 8, dans lequel la première session de tunnellisation (130) est associée à une première route, la première route associée au premier identifiant de version de routage représentant une version d'une table de routage associée au premier pair (105), le premier identifiant de version de routage maintenu dans la mémoire d'ordinateur associé au second pair.

10. Procédé selon la revendication 8 ou 9, comprenant le maintien du premier identifiant de version de routage dans la mémoire d'ordinateur à l'intérieur d'une table de routage.

11. Procédé selon l'une quelconque des revendications 8 à 10, dans lequel le premier paquet de données comprend un paquet de maintien en activité.

12. Réseau de données configuré pour résoudre des données satisfaisant à un seuil d'importance reçues d'un premier pair (105), le réseau comprenant :
un second pair (115) configuré pour :
négocier les détails de première et seconde sessions de tunnellisation de réseau privé virtuel, VPN (130, 135), la première session de tunnellisation VPN ayant un premier identifiant de tunnel et la seconde session de tunnellisation VPN ayant un second identifiant de tunnel ;
recevoir (505) un premier paquet de données à l'intérieur d'une première session de tunnellisation (130), le premier paquet de données ayant un premier identifiant de tunnel associé à la première session de tunnellisation (130) signalant que le premier paquet de données doit être, et a été, transmis à l'intérieur de la première session de tunnellisation (130), un premier identifiant de séquence de paquets primaire unique à l'intérieur de la première session de tunnellisation VPN (130), et un identifiant de séquence de paquets secondaire, et
recevoir un second paquet de données à l'intérieur d'une seconde session de tunnellisation (135), le second paquet de données ayant un second identifiant de tunnel associé à la seconde session de tunnellisation (135) signalant que le second paquet de données doit être, et a été, transmis à l'intérieur de la seconde session de tunnellisation (135), un second identifiant de séquence de paquets primaire unique à l'intérieur de la seconde session de tunnellisation VPN (135), et l'identifiant de séquence de paquets secondaire ;
un moteur de duplication (165) configuré pour rejeter (525) le premier paquet de données ou le second paquet de données lors de la détermination que le premier paquet de données et le second paquet de données comprennent tous deux l'identifiant de séquence de paquets secondaire indiquant que le premier paquet de données et le second paquet de données sont dupliqués ; et
dans lequel le premier paquet de données comprend un identifiant de version de routage associé au premier paquet de données, le second pair (115) comprenant un moteur de routage (170) transmettant un paquet de table de routage lors de la détermination d'une non-concordance entre un premier identifiant de version de routage et l'identifiant de version de routage associé au premier paquet de données, dans lequel le paquet de table de routage comprend un entier représentant une version actuelle réelle de la table de routage et un tableau de longueur variable représentant une pluralité d'entrées de table de routage dans la table de routage.

13. Support lisible par ordinateur sur lequel sont stockées des instructions exécutables par ordinateur qui, lorsqu'elles sont exécutées par un processeur, amènent le processeur à réaliser un procédé selon l'une quelconque des revendications 1 à 11.
